# EUROPÄISCHE PATENTSCHRIFT

(11) **EP 1 221 454 B1**
(45) Veröffentlichungstag und Bekanntmachung des Hinweises auf die Patenterteilung: **27.04.2005**
(21) Anmeldenummer: 01130612.3
(22) Anmeldetag: 27.12.2001
(51) Int. Cl.: C08G 64/30, C08G 64/40

(54) **Verfahren zur Herstellung von Polycarbonat**
Process for producing polycarbonate
Procédé de préparation de polycarbonate

(30) Priorität: 05.01.2001 DE 10100404
(43) Veröffentlichungstag der Anmeldung: 10.07.2002
(73) Patentinhaber: Bayer MaterialScience AG, 51368 Leverkusen (DE)
(72) Erfinder: Hucks, Uwe, 46519 Alpen (DE); Hallenberger, Kaspar, 51375 Leverkusen (DE); Kratschmer, Silke, Dr., 47829 Krefeld (DE); Prein, Michael, Dr., 2930 Brasschaat (BE); Kühling, Steffen, Dr., 40670 Meerbusch (DE)

(56) Entgegenhaltungen:
- EP-A- 1 018 529
- US-A- 5 734 004

## Beschreibung

Die vorliegende Anmeldung betrifft ein Verfahren zur Herstellung von Polycarbonat durch Schmelzeumesterung von Diarylcarbonaten mit Dihydroxyarylverbindungen, wobei das im Überschuss eingesetzte Diarylcarbonat in hoher Qualität aus den Brüdenströmen wiedergewonnen und erneut in das Umesterungsverfahren eingesetzt wird. Die gleichzeitig in hoher Reinheit isolierten Monohydroxyarylverbindungen können für die Herstellung von Diarylcarbonaten oder Dihydroxyarylverbindungen verwendet werden.

Bei der Herstellung von Polycarbonat durch Schmelzeumesterung werden Dihydroxyarylverbindungen mit Diarylcarbonaten zur Reaktion gebracht, wobei im Sinne einer Umesterungsreaktion die Monohydroxyarylverbindung aus den Diarylcarbonaten abgespalten wird. Die Aufkondensation führt zunächst zur Bildung niedermolekularer Polycarbonat-Oligomere, die unter fortgesetzter Abspaltung der Monohydroxyarylverbindung zu hochmolekularem Polycarbonat weiterreagieren. Der Reaktionsfortschritt kann durch den Einsatz geeigneter Katalysatoren gefördert werden. Daneben ist es zur Erreichung hoher Molekulargewichte nötig, die entstehende Monohydroxyarylverbindung fortlaufend aus dem Reaktionsraum zu entfernen und somit den Reaktionsfortschritt zu fördern. Zur effizienten Entfernung der Monohydroxyarylverbindung werden verschiedene technische Maßnahmen getroffen, wie beispielhaft die Erhöhung der Temperatur des Reaktionsmediums, die Verringerung des Drucks im Gasraum über dem Reaktionsmedium, die Entspannung der erwärmten Reaktionsmischung in einen Gasraum mit vermindertem Druck, das Einleiten inerter Gase oder der Dämpfe leichtflüchtiger Lösemittel als Schleppmittel sowie der Einsatz spezieller Reaktionsapparate, die insbesondere beim Erreichen hochviskoser Schmelzen durch fortwährende Oberflächenerneuerung den Austrag der Monohydroxyarylverbindung fördern. In allen genannten Ausführungsformen werden gasförmige Brüdenströme erzeugt, die hauptsächlich die Monohydroxyarylverbindung aus dem Diarylcarbonaten enthalten. Je nach Art der eingesetzten Dihydroxyarylverbindung und der eingesetzten Diarylcarbonate kann die Masse der erhaltenen Brüdenströme größer sein als die Masse des erhaltenen Polycarbonats. Eine Wiederverwendung der erhaltenen Brüdenströme ist also für eine wirtschaftliche Herstellung von Polycarbonat nach dem Schmelzeumesterungsverfahren notwendig.

Technisch sehr bedeutsam ist die Herstellung von hochmolekularem Polycarbonat aus 2,2-Bis(4-hydroxyphenyl)-propan (Bisphenol A, im folgenden BPA genannt) und Diphenylcarbonat (im folgenden DPC genannt). In diesem Falle bestehen die genannten Brüdenströme in erster Linie aus Phenol. Das hierbei erhaltene Phenol kann im Sinne eines Kreislaufs wieder zur Herstellung von DPC dienen, wie erstmalig in Chemistry and Physics of Polycarbonates, Polymer Reviews, H. Schnell, Vol. 9, John Wiley and Sons, Inc. (1964) dargestellt. Weitere Angaben zu der Wiederverwendung des erhaltenen Phenol werden beispielsweise in der WO 93/3 084 und der LU A 88 569 gemacht. In der LU A 88 564 ist andererseits die Nutzung des erhaltenen Phenols zur Herstellung von BPA durch Umsetzung mit Aceton beschrieben. Sowohl für die Herstellung von DPC als auch für die Herstellung von BPA werden zur Erreichung hoher Produktqualitäten hohe Anforderungen an die Reinheit des eingesetzten Phenols gestellt.

In US 5 922 827 ist ein Verfahren zur Wiederverwertung des Phenols aus dem Umesterungsprozess von Diphenolen und Diarylcarbonaten beschrieben. Das entstandene Phenol wird hier zur Herstellung von Diaryloxalaten durch Umesterung mit Dialkyloxalaten verwendet, welches durch Decarbonylierung in Diarylcarbonat überführt wird. Jedoch wird auch hier nicht auf eine Wiederverwendung von Diarylcarbonat eingegangen.

Auch in den japanischen Schriften JP 2 000 053 759 A (auch US 6 277 945 B1) und JP 2 000 128 976 A wird Phenol aus der Umesterung wiedergewonnen und für die BPA- bzw. DPC-Herstellung eingesetzt.

In der EP-A 992 522 wird ebenfalls die Monohydroxyarylverbindung aus der Umesterung wiedergewonnen, dieses wird jedoch nur als Lösungsmittel/Carrier für den zuzusetzenden Katalysator verwendet.

Bei der praktischen Durchführung der Herstellung von Polycarbonaten zeigt sich, dass die Brüdenströme neben der hauptsächlich vorhandenen Monohydroxyarylverbindung aus dem Diarylcarbonat auch noch andere Komponenten enthalten, die im Reaktionsmedium entweder direkt vorhanden sind oder unter den Reaktionsbedingungen durch Nebenreaktionen aus den Komponenten des Reaktionsmediums gebildet werden. Beispielhaft können als Nebenkomponenten Diarylcarbonate, Dihydroxyarylverbindungen, Katalysatorreste oder Folgeprodukte der verwendeten Katalysatoren sowie Spalt- und Umlagerungsprodukte der verwendeten Diarylcarbonate und der verwendeten Dihydroxyarylverbindungen sowie deren Folgeprodukte auftreten. Im Falle der technisch bedeutsamen Synthese von Polycarbonaten aus BPA und DPC treten in den Brüdenströmen neben Phenol als Nebenkomponenten beispielhaft DPC, BPA, daraus entstehende niedermolekulare Oligomere Salicylsäurephenylester, Isopropenylphenol und dessen Dimere und Oligomere, Hydroxyindane, Hydroxychromane und Katalysatorreste und -folgeprodukte auf. Insbesondere der Gehalt an DPC kann bei Anwendung entsprechender Reaktionsbedingungen in der Polykondensationsreaktion in den Brüdenströmen Werte von mehr als 5 Gew.-% erreichen. Dieser Wertstoff geht somit bei den herkömmlichen Verfahren in nicht unerheblichen Mengen verloren.

Daneben können in den Brüdenströmen auch nach Abtrennung des Polycarbonats unter den vorherrschenden Bedingungen durch Spaltungs- und/oder Rekombinationsreaktionen aus den oben genannten Nebenkomponenten zusätzliche Nebenprodukte entstehen. So kann beispielsweise die Reaktion von Isopropenylphenol und Phenol in den Brüdenströmen zur Bildung von BPA führen.

Die Abtrennung der oben genannten Nebenkomponenten wie Isopropenylphenol, Salicylsäurephenylester oder Hydroxyindanen aus der Polycarbonatschmelze über die Gasphase ist prinzipiell begrüßenswert, da durch die Entfernung dieser Komponenten eine höhere Reinheit des erhaltenen Polycarbonats gewährleistet wird. Die Anwesenheit dieser Nebenkomponenten in den Brüdenströmen bedeutet aber, dass das bei der Kondensation der Brüdenströme erhaltene Phenol nicht direkt zur Herstellung von DPC oder BPA oder für andere chemische Reaktionen genutzt werden kann, da für diese Reaktionen im allgemeinen extrem hohe Reinheitskriterien an das verwendete Phenol gestellt werden. Zwar kann durch übliche Reinigungsverfahren wie einfache Destillation oder Umkristallisation aus den Brüdenströmen Phenol hoher Reinheit erhalten werden, jedoch werden hierbei die als Nebenkomponenten vorhandenen Wertstoffe wie DPC nicht zur Weiterbenutzung isoliert.

Diese Verfahren haben daher den Nachteil, dass das im Überschuss eingesetzte DPC mit dem aus der destillativen Phenolrückgewinnung verbleibenden Sumpf verbrannt wird. DPC kann dabei in Gewichtsanteilen von ca. 90 % im Sumpf vorhanden sein. Es entsteht also ein hoher Verlust an DPC.

Versuche, das DPC in hochreiner Form ebenfalls destillativ über Kopf zu reinigen, schlagen regelmäßig wegen der bei den dann notwendigen hohen Sumpftemperaturen auftretenden Nebenreaktionen fehl.

Es stellt sich somit ausgehend vom Stand der Technik die Aufgabe, ein Verfahren zur Herstellung von Polycarbonat mittels Schmelzeumesterung bereitzustellen, welches die Wiedergewinnung des nicht umgesetzten Diarylcarbonats aus den Brüdenströmen in hoher Reinheit ermöglicht und damit den Rohstoffeinsatz merklich reduziert.

Idealerweise gelingt es damit, die Brüdenströme aus der Herstellung von Polycarbonaten mittels Schmelzeumesterung durch eine geeignete Kombination von Reinigungsoperationen derart aufzutrennen, dass die Wertstoffe (im allgemeinen sind dies die Monohydroxyarylverbindung aus dem Diarylcarbonat und das Diarylcarbonat selbst, im beispielhaften Fall der Herstellung von Polycarbonat aus BPA und DPC sind dies Phenol und DPC) in hohen Ausbeuten isoliert werden, wobei die erhaltene Monohydroxyarylverbindung eine ausreichende Reinheit zur Herstellung der entsprechenden Diarylcarbonate oder Dihydroxyverbindungen aufweist und das isolierte Diarylcarbonat eine ausreichende Reinheit aufweist, um ohne Verminderung der Polycarbonatqualität als Rohstoff direkt in die Polycarbonatsynthese durch Schmelzeumesterung zurückgeführt zu werden. Nebenkomponenten im Verfahren sollen idealerweise weitestgehend entfernt werden, die Menge an nichtverwertbaren Reststoffen aus der Brüdenaufarbeitung, welche entsorgt werden müssen, soll <5%, bevorzugt <4 %, ganz besonders bevorzugt <3.5 %, bezogen auf die in die Brüdenaufarbeitung eingebrachte Menge sein, um unerwünschte Materialverluste gering zu halten.

Überraschenderweise wurde nun ein Verfahren zur Herstellung von Polycarbonat gefunden, welches diese Aufgabe löst. Das erfindungsgemäße Verfahren ist durch einen Aufarbeitungsschritt der vereinigten Brüdenströme gekennzeichnet, welcher die destillative Abtrennung der Monohydroxyarylverbindung, des Diarylcarbonats sowie der Nebenprodukte aus den Reaktionsbrüden ermöglicht, wobei die überraschend hohe Qualität der so wiedergewonnenen Monohydroxyarylverbindung den direkten Wiedereinsatz in den Herstellprozess des Diarylcarbonats bzw. der Dihydroxyarylverbindung und des so wiedergewonnenen Diarylcarbonats in das Schmelzeumesterungsverfahren zur Herstellung von Polycarbonat ermöglicht.

Die vorliegende Anmeldung betrifft demnach ein Verfahren zur Herstellung von Polycarbonat durch Umesterung von einem Diarylcarbonat und einer aromatischen Dihydroxyverbindung zum Oligo-/Polycarbonat unter Abspaltung der Monohydroxyarylverbindung, wobei die entstehende Monohydroxyarylverbindung wieder zur Herstellung von Diarylcarbonat bzw. der Dihydroxyarylverbindung verwendet werden kann, welche wiederum in das Umesterungsverfahren eingesetzt werden können, dadurch gekennzeichnet, dass die Abtrennung der Monohydroxyarylverbindung destillativ in einer Art und Weise erfolgt, dass gleichzeitig das überschüssige Diarylcarbonat in einer Qualität zurückgewonnen wird, dass es selbst direkt in das Schmelzeumesterungsverfahren zurückgeführt werden kann.

Das Verfahren wird im folgenden Fließbild schematisch vereinfacht dargestellt:

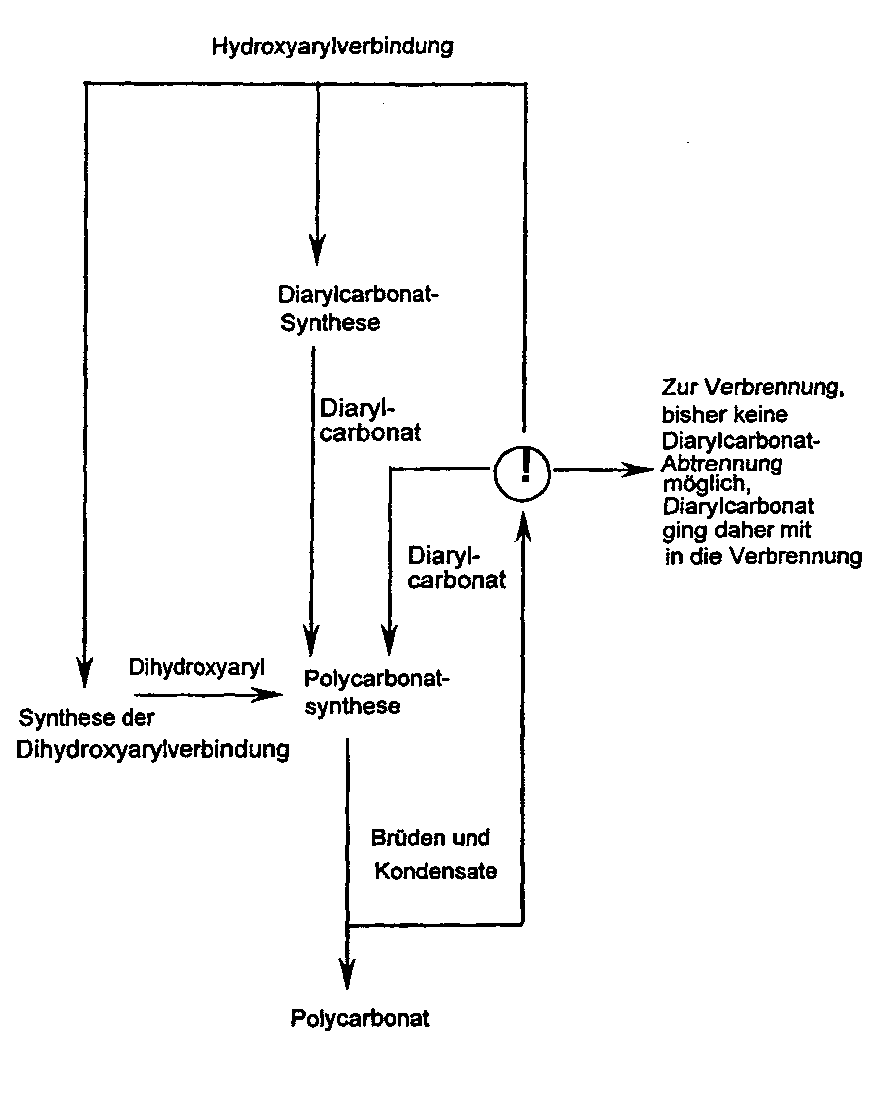

Die erfindungsgemäße Abtrennung der Monohydroxyarylverbindung und des Diarylcarbonats erfolgt in einer speziellen Trennstufenabfolge, die sich von den üblichen Destillationsketten dadurch unterscheidet, dass das Diarylcarbonat in der letzten Kolonne nicht über Kopf, sondern dem Sumpf der Kolonne in hoher Reinheit entnommen wird, überraschenderweise ist es alternativ auch möglich, die Abtrennung des Diarylcarbonats durch Seitenstromentnahme in der letzten Kolonne zu bewerkstelligen.

Für den Fachmann üblich wäre beispielsweise bei dem technisch bedeutsamen Umesterungsverfahren zur Herstellung von Polycarbonat aus Bisphenol A und Diphenylcarbonat (DPC) eine Trennstufenreihenfolge der Art, dass in der 1. Kolonne das leichtsiedende Phenol über Kopf abgenommen wird, in der 2. Kolonne die etwas schwerer flüchtigen Verunreinigungen, die vor DPC verdampfen, über Kopf abgetrennt werden und in der 3. Kolonne das DPC über Kopf destilliert wird, während die schwersiedenden Verunreinigungen im Sumpf der 3. Kolonne verbleiben. Nach diesem Verfahren ist jedoch kein hochreines DPC zu erhalten.

Die überraschenderweise mögliche Entnahme des DPC's in hervorragender Qualität aus dem Sumpf bzw. Seitenstrom ermöglicht eine tiefere Kolonnentemperatur und vermeidet die sonst beobachtete Zersetzung des Diarylcarbonats und anderer noch vorhandener Verbindungen, was eine effektive destillative Rückgewinnung des DPC's in hochreiner Form aus den Brüden bislang verhinderte.

Das Verfahren ist natürlich entsprechend auch auf andere Diarylcarbonate anwendbar.

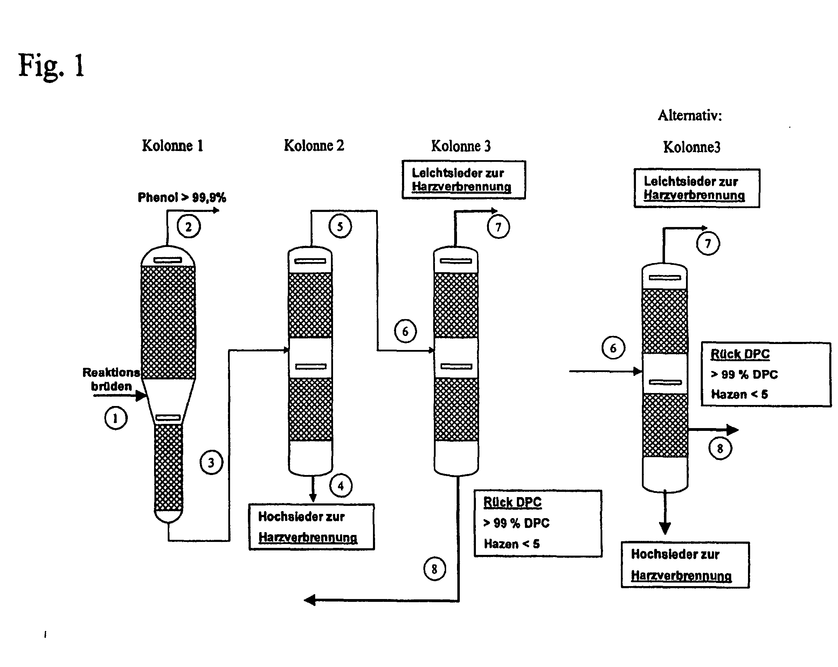

Die erfindungsgemäße Trennstufenfolge ist in Fig. 1 dargestellt:

Die Reaktionsbrüden werden in mittlerer Höhe (1) in die 1. Kolonne eingespeist, mit der hochreine Monohydroxyarylverbindung über Kopf (2) abgetrennt und in den Kreislauf, d.h. z. B. in die Diarylcarbonatsynthese zurückgeführt oder zur Herstellung der Dihydroxyarylverbindung verwendet wird. Der Sumpf (3) wird wiederum auf mittlerer Höhe einer zweiten Kolonne zugeführt, in welcher über den Sumpf (4) die hochsiedenden Nebenprodukte abgetrennt werden, über Kopf (5) werden die übrigen Bestandteile auf mittlerer Höhe (6) in eine dritte Kolonne eingespeist, der dann über Kopf (7) die Leichtsieder entnommen werden, die gemeinsam mit dem Sumpf aus Kolonne 2 der Harzverbrennung zugeführt werden, während über (8) der Sumpf der dritten Kolonne, bestehend aus Diarylcarbonat, mit einer hervorragenden Farbzahl und Qualität entnommen wird, welches direkt in den Umesterungsprozess zur Herstellung von Polycarbonat zurückgeführt werden kann. Alternativ ist bei der dritten Kolonne auch die bereits beschriebene Abnahme des Diarylcarbonats im Seitenstrom möglich.

Die Reinheit der über Kopf abgetrennten Monohydroxyarylverbindung im erfindungsgemäßen Verfahren ist >99 %, bevorzugt >99,8 %, ganz besonders bevorzugt >99,95 %. Die Reinheit des DAC's (8) beträgt >99,0 % bevorzugt >99,5 %, ganz besonders bevorzugt >99,9 %. Die Farbe des so zurückgewonnenen DAC's ist durch eine Hazen-Zahl kleiner 5 gekennzeichnet.

Die als Purge abzutrennenden Nebenkomponenten betragen im Sinne des erfindungsgemäßen Verfahrens, bezogen auf die in die Brüdenaufarbeitung eingebrachte Menge an Brüden <5 %, bevorzugt <4%, ganz besonders bevorzugt <3,5%.

Während also in den bisher bekannten Verfahren der Isolierung der Monohydroxyarylverbindung aus den Brüden der Polycarbonatherstellung nach dem Umesterungsverfahren die verbleibenden Rückstände, inklusive der darin vorhandenen Diarylcarbonate, verbrannt wurden, wird im erfindungsgemäßen Verfahren auch das Diarylcarbonat in hochreiner Form isoliert und in den Prozess zurückgeführt. Dies spart Rohstoffe und Abgase ebenso wie Energie.

Für das erfindungsgemäße Verfahren geeignete Diphenole sind solche der Formel (1) 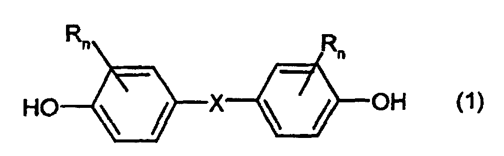 worin X = C₁ - C₈ Alkyliden oder Cycloalkyliden, S, SO₂, O, C=O oder eine Einfachbindung und R = CH₃, Cl oder Br und n = Null, 1 oder 2 ist.

Bevorzugte Diphenole sind z. B.:
4,4'-Dihydroxydiphenyl,
α,α'-Bis-(4-hydroxyphenyl)-m-diisopropylbenzol,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1 -Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 4,4'-Dihydroxydiphenyl, α,α'- Bis-(4-hydroxyphenyl)-m-diisopropylbenzol, 2,2-Bis-(4-hydroxyphenyl)-propan und 1,1-Bis-(4-hydroxyphenyl)-3,3,5-trimethylcyclohexan. Ganz besonders bevorzugt 2,2-Bis-(4-hydroxyphenyl)-propan.

Bei der Verwendung der wiedergewonnenen Monohydroxyarylverbindung in der 1. Kolonne ist bei einem direkten Einsatz in die Herstellung der Dihydroxyarylverbindung darauf zu achten, dass die jeweils verwendeten Aryle die gleichen Substituenten tragen.

Es können sowohl eine Dihydroxyarylverbindung der Formel (I) unter Bildung von Homopolycarbonaten als auch mehrere Dihydroxyarylverbindungen der Formel (I) unter Bildung von Copolycarbonaten verwendet werden.

Diarylcarbonate im Sinne vorliegender Erfindung sind Di-C₆-C₁₄-Arylcarbonate, vorzugsweise die Diarylcarbonate von Phenol oder alkylsubstituierten Phenolen, also Diphenylcarbonat oder z. B. Dikresylcarbonat. Bezogen auf 1 mol Dihydroxyarylverbindung werden die Diarylcarbonate in 1,01 bis 1,30 mol, bevorzugt in 1,02 bis 1,20 mol eingesetzt.

Die Herstellung der Diarylcarbonate erfolgt in bekannter Weise (z. B. EP A's 0 483 632, 0 635 476, 0 635 477 und 0 645 364) durch Phosgenierung (in einer Emulsion, in einer Lösung, in der Schmelze oder in der Gasphase) der Monophenole.

Die Herstellung der Diarylcarbonate kann ebenso durch Direktoxidation von Monohydroxyarylverbindungen mit CO und Sauerstoff oder andern Oxidationsmitteln erfolgen (s. bspw. DE OS 27 38 437, 28 15 512, 27 38 488, 28 15 501, 29 49 936, 27 38 487 u.v.a.)

Die Polycarbonate können durch den Einsatz geringer Mengen Verzweiger bewusst und kontrolliert verzweigt werden. Einige geeignete Verzweiger sind:
Phloroglucin,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
Isatinbiskresol,
Pentaerythrit,
2,4-Dihydroxybenzoesäure,
Trimesinsäure,
Cyanursäure,
1,4-Bis-(4',4"-dihydroxytriphenyl)-methyl)-benzol und
α,α',α"-Tris-(4-hydroxyphenyl)-1,3,4-triisopropenylbenzol.
Besonders bevorzugt sind 1,1,1-Tri-(4-hydroxyphenyl)-ethan und Isatinbiskresol.

Die gegebenenfalls mitzuverwendenden 0,05 bis 2 mol-%, bezogen auf eingesetzte Dihydroxyarylverbindung, an Verzweigern, können mit den Dihydroxyarylverbindungen zusammen eingesetzt werden.

Es ist darauf zu achten, dass die Reaktionskomponenten für den ersten Schritt, die Umesterung, also die Dihydroxyarylverbindungen und die Diarylcarbonate, frei von Alkali- und Erdalkaliionen sind, wobei Mengen von kleiner 0,1 ppm an Alkali- und Erdalkaliionen toleriert werden können. Derart reine Diarylcarbonate bzw. Dihydroxyarylverbindungen sind erhältlich, indem man die Diarylcarbonate bzw. Dihydroxyarylverbindungen umkristallisiert, wäscht oder destilliert. Beim erfindungsgemäßen Verfahren soll der Gehalt an Alkali- und Erdalkalimetallionen sowohl in der Dihydroxyarylverbindung als auch im Diarylcarbonat einen Wert von <0,1 ppm betragen.

Die Umesterungsreaktion der aromatischen Dihydroxyarylverbindung und des Diarylcarbonats in der Schmelze wird bevorzugt in zwei Stufen durchgeführt. In der ersten Stufe findet bei dem technisch bedeutenden Umesterungsprozess das Aufschmelzen des BPA's und des DPC's bei Temperaturen von 80 bis 250°C, bevorzugt 100 bis 230°C, besonders bevorzugt 120 bis 190 °C unter normalem Druck in 0 bis 5 Stunden, bevorzugt 0,25 bis 3 Stunden statt. Nach Zugabe des Katalysators wird durch Anlegen von Vakuum (bis zu 2 mbar) und Erhöhung der Temperatur (auf bis zu 260°C) durch Abdestillieren des Phenols das Oligocarbonat aus dem BPA und dem DPC hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2 000 bis 18 000 bevorzugt von 4 000 bis 15 000.

In der zweiten Stufe wird bei der Polykondensation durch weiteres Erhöhen der Temperatur auf 250 bis 320°C, bevorzugt 270 bis 295°C und einem Druck von <2 mbar das Polycarbonat hergestellt. Hierbei wird der Rest an Brüden aus dem Prozess entfernt.

Die vereinigten Brüden werden anschließend erfindungsgemäß aufgearbeitet und das Phenol wird bevorzugt in den Herstellprozess des DPC's oder BPA's und das DPC wird bevorzugt in den Umesterungsprozess zur Herstellung von Polycarbonat zurückgeführt, sie können aber auch für andere Zwecke verwendet werden.

Katalysatoren im Sinne des erfindungsgemäßen Verfahren sind alle anorganischen oder organischen basischen Verbindungen, beispielsweise: Lithium-, Natrium-, Kalium-, Cäsium-, Calzium-, Barium-, Magnesium-, -hydroxide, -carbonate, -halogenide, -phenolate, -bisphenolate, -fluoride, -acetate, -phosphate, -hydrogenphosphate, -boranate, quartäre Stickstoff- und Phosphorverbindungen, wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Tetraphenylphosphoniumphenolat, Dimethyldiphenylammoniumhydoxid, Tetraethylammoniumhydroxid, DBU, DBN oder Guanidinsysteme, wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base P₁-t-Oct = tert.-Octyl-imino-tris-(dimethylamino)-phosphoran, Phosphazen-Base P₁-t-Butyl = tert.-Butyl-imino-tris-(dimethylamino)-phosphoran, BEMP = 2-tert.-Butylimino-2-diethylamino-1,3-dimethyl-perhydro-1,3-diaza-2-phosphorin. Besonders bevorzugt sind Tetraphenylphosphoniumphenolat allein und/oder Natriumhydroxid, Natriumphenolat und Natriumbisphenolat.

Diese Katalysatoren werden in Mengen von 10⁻² bis 10⁻⁸ mol, bezogen auf 1 mol Dihydroxyarylverbindung, eingesetzt.

Die Katalysatoren können auch in Kombination (zwei oder mehrere) miteinander eingesetzt werden.

Beim Einsatz von Alkali-/ Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen. Die Zugabe des Alkali-/ Erdalkalimetallkatalysators kann z. B. als Feststoff oder als Lösung in Wasser, Phenol, Oligocarbonat, Polycarbonat erfolgen. Die Mitverwendung von alkalisch wirkenden Alkali- bzw. Erdalkalimetallkatalysatoren widerspricht nicht der vorstehend erwähnten Forderung nach Reinheit der Reaktionspartner, da hier gezielt bestimmte Mengen spezieller Verbindungen zugesetzt werden

Die Reaktion der aromatischen Dihydroxyarylverbindung und des Diarylcarbonats zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Die aromatischen Polycarbonate des erfindungsgemäßen Verfahrens sollen mittlere Gewichtsmolmassen M_{w} von 18 000 bis 80 000, vorzugsweise 19 000 bis 50 000 haben, ermittelt durch Messung der rel. Lösungsviskosität in Dichlormethan oder in Mischungen gleicher Gewichtsmengen Phenol/o-Dichlorbenzol, geeicht durch Lichtstreuung.

Beim technisch bedeutenden Umesterungsprozess zur Herstellung von Polycarbonat aus BPA und DPC erfolgt die erfindungsgemäße Abtrennung des DPC's und des Phenols aus den Brüdenströmen beispielsweise im allgemeinen unter folgenden Bedingungen (s. Fig.1):

In Kolonne 1 der Trennsequenz wird Phenol aus dem dampfförmigen Zulauf gewonnen. Diese Kolonne arbeitet in einem Druckbereich von 5 bis 100 mbar, das entspricht einem Temperaturbereich von 65°C am Kopf bis 220°C im Sumpf der Kolonne. Der bevorzugte Arbeitsbereich ist 20 bis 30 mbar, mit dem dazu gehörenden Temperaturbereich von 80 bis 190°C. Das notwendige Rücklaufverhältnis zur Erzielung eines hochreinen Phenols liegt im Bereich von 0,2 bis 2, bevorzugt bei 0,2 bis 0,5.

Die Kolonne 2 zur Ausschleusung der Hochsieder arbeitet ebenfalls im Druckbereich von 5 bis 100 mbar, gleichbedeutend mit einem Temperaturbereich von 140 bis 230°C über die Kolonne. Besonders bevorzugt ist auch hier der Druckbereich von 10 bis 20 mbar, d.h. der Temperaturbereich von 160 bis 200°C.

Der Arbeitsbereich der Kolonne 3, bei der DPC als Sumpfprodukt ausgeschleust wird, liegt ebenfalls im Druckbereich von 5 bis 100 mbar, entsprechend liegen die Temperaturen zwischen 120 und 220°C. Der bevorzugte Arbeitsbereich liegt zwischen 15 und 25 mbar, im bevorzugten Temperaturbereich von 135 bis 195°C. Zur Abtrennung zwischensiedender Komponenten liegen die Rücklaufverhältnisse zwischen 2 und 40, bevorzugt im Bereich von 10 bis 20.

Die Reinheit des Phenols liegt dann bei >99 % bevorzugt bei >99,8 %, besonders bevorzugt bei >99,95 %, die der DPC's >99,0 %, bevorzugt >99,5 %, ganz besonders bevorzugt >99,9 %.

Die nachfolgenden Beispiele sollen das erfindungsgemäße Verfahren illustrieren ohne es jedoch einzuschränken:

### Beispiele

### Beispiel 1

Die Reaktionsbrüden einer Pilotanlage zur SPC-Herstellung fallen mit einer Menge von 22,8 kg/h an. Die Abtrennung des Phenols erfolgte mittels einer Kolonne mit 180 mm Durchmesser. Verstärker und Abtrieb sind mit einer Feinvakuum-Packung gefüllt. Die Kondensation erfolgte in einem Kondensator, der mit auf 40°C erwärmten Kühlwasser betrieben wurde. Der Kopfdruck der Phenolkolonne betrug 23 mbar, entsprechend die Siedetemperatur 83°C. Das Rücklaufverhältnis war zu 0,54 gewählt. Die Reinheit des Phenols lag bei >99,95 %. Das Sumpfprodukt enthielt bei einer Temperatur von 175°C noch 1 % Phenol. Der DPC-Gehalt betrug 94,9 %, die Menge 4 kg/h. Die Kolonne wurde mit einem dampfbeheizten Fallfilm-Verdampfer betrieben.

Das Sumpfprodukt wurde mittig in die Kolonne zur Ausschleusung der Hochsieder eingespeist. Verstärker- und Abtriebsteil der Kolonne bestanden jeweils aus 1 m Labor- Feinvakuumpackung, der Kolonnendurchmesser betrug über die gesamte Länge 80 mm. Die Kondensation erfolgte mit 80°C warmem Wasser. Dem Kopfdruck von 18 mbar entsprach eine Temperatur von 174°C. Die Phenolkonzentration stieg durch Reaktionsvorgänge auf 3 % an, die DPC-Konzentration des Destillates war 96,8 %.

Bei einer Sumpftemperatur von 198°C enthielt die ausgeschleuste Sumpfmenge von 338 g/h nur noch 48 % DPC. Durch Nachreaktion betrug die Phenolkonzentration im Sumpf immer noch 0,8 %. Die Beheizung der Kolonne erfolgte über einen Glas-Fallfilmverdampfer, der mit dampfförmigem Diethylenglykol von 220°C beaufschlagt wurde.

Das Destillat der Hochsieder-Kolonne wurde der DPC-Kolonne zugeführt. Im Verstärkerteil der Kolonne waren 2,5 m, im Abtriebsteil 2 m Labor-Feinvakuumpackung installiert. Die Kondensation erfolgte wieder mit 80°C heißem Wasser, ebenso wurde die Verdampfung im Sumpf in einem Glas-Fallfilmverdampfer erzeugt. Am Kolonnenkopf wurde ein Vakuum von 34 mbar angelegt, die Kopftemperatur betrug 170°C, das Rücklaufverhältnis 15. Im Destillat, das mit 90 g/ h ausgeschleust wurde, betrug die DPC- Konzentration 45 %. Die Nachreaktion der Oligomeren in der Hochsiederkolonne bewirkt sowohl einen Phenol-, wie auch einen DPC-Mengenanstieg während des Versuches. Die im Sumpf mit 195°C ausgeschleuste DPC-Menge von 3500 g/h wurde in die Reaktion zurückgeführt. Mit einer Konzentration >99,95 % und einer Hazen-Zahl von ca. 5 wurde nach einer 1-wöchigen Rückführung keine Farbveränderung im Endprodukt Polycarbonat festgestellt.

Als weiteres Merkmal für die Eignung des Diphenylcarbonates zur Herstellung von Polycarbonat wird das Verhalten während der Umesterung herangezogen. Das Reaktionsgemisch aus 17,1 g (0,075 mol) 2,2-Bis-(4-hydroxyphenyl)-propan und 17 g (0,07945 mol) des zu testenden Diphenylcarbonats wird in einem 100 ml Kolben mit 0,0001 mol-% NaOH (bezogen auf 2,2-Bis-(4-hydroxyphenyl)-propan) als 1 %ige wässrige Lösung versetzt und in ein auf 270°C vorgeheiztes Ölbad gebracht. Festgehalten wird die Temperatur, bei der die Abspaltung von Phenol beginnt, sowie die Zeit nach dem Eintauchen in das Ölbad bis zum Beginn der Abspaltung und mit Standardwerten (in Klammern) verglichen. Aus dem Reaktionsgemisch mit dem als Sumpfprodukt gewonnenen Diphenylcarbonat begann die Phenoldestillation bei 257°C (<260°C) nach 12,5 min (<15 min.). Das in der destillativen Trennsequenz gewonnene Diphenylcarbonat war somit aufgrund der Analysenwerte, der Pilotversuchsergebnisse und des Verhaltens während der Umesterung für die Herstellung von Polycarbonat geeignet

### Beispiel 2

### zur Seitenstromentnahme des DPC:

Die Mengen- und Betriebsbedingungen in der Phenol-Kolonne entsprachen dem Beispiel 1. Es wurden lediglich 3 kg/h aus dem Sumpf der Phenol Kolonne in die Hochsiederabtrennung eingespeist, der Überschuss wurde entsorgt. Die Betriebsbedingungen der Hochsieder-Kolonne waren auf 12 mbar Kopfdruck geändert, das entsprach einer Temperatur von 163°C. Im Sumpf stellte sich dabei für eine DPC-Konzentration von 52 % eine Temperatur von 190°C ein. Die Mengen entsprachen mit 251 g/h Sumpfprodukt den Verhältnissen in Beispiel 1. Das Destillat der Hochsieder-Kolonne wurde der DPC-Kolonne zugeführt. Die Destillatentnahme der DPC-Kolonne betrug 65 g/h, also annähernd den Bedingungen in Beispiel 1. Die Variation bestand in der dampfförmigen Entnahme des DPC's oberhalb des Fallfilmverdampfers. Die kondensierte DPC-Menge betrug 2,6 kg/h, die Konzentration war > 99,95 % und die Hazen-Zahl <5. Die Seitenstromkondensation erfolgte mit 80°C heißem Wasser, die DPC-Ausschleusung über Wechselvorlagen. Der Standard-Umesterungsversuch verlief positiv, die Starttemperatur betrug 256°C die Startzeit 12,5 min. Die im Sumpf entnommene Überschussmenge von 84 g/h, die zum Betrieb des Fallfimverdampfers nötig ist, wies einen leichten Gelbstich auf, der durch die lange Verweilzeit im Fallfilmverdampfer bedingt ist.

## Patentansprüche

1. Verfahren zur Herstellung von Polycarbonat durch Schmelzumesterung von Diarylcarbonat mit Dihydroxyarylverbindungen, welches eine Reihe an Schritten enthält, **dadurch gekennzeichnet, dass** neben der Monohydroxyarylverbindung auch das überschüssige Diarylcarbonat aus den Brüdenströmen isoliert wird, indem
(i) der entstehende Dampfstrom auf mittlerer Höhe einer ersten Kolonne eingebracht wird, und
(ii) der Dampfstrom aufgetrennt wird in ein Kopfprodukt, welches die hochreine Monohydroxyaryl-Verbindung enthält, und in einen Sumpf, und
(iii) die hochreine Monohydroxyaryl-Verbindung aus (ii) direkt im Herstellprozess wieder eingesetzt werden kann, und
(iv) der Sumpf aus (ii) wiederum auf mittlerer Höhe einer zweiten Kolonne zugeführt wird, und
(v) in der zweiten Kolonne dieser erste Sumpf aufgetrennt wird in einen Sumpf der zweiten Kolonne, welcher die hochsiedenden Nebenprodukte enthält, und in ein Kopfprodukt, und
(vi) das Kopfprodukt aus (v) wiederum auf mittlerer Höhe einer dritten Kolonne zugeführt wird, und
(vii) in der dritten Kolonne über Kopf die Leichtsieder entnommen werden und als Sumpf oder im Seitenstrom Diarylcarbonat entnommen wird, und
(vii) das entnommene Diarylcarbonat direkt dem Umesterungsprozeß zur Herstellung von Polycarbonat zurückgeführt wird.

## Claims

1. Process for producing polycarbonate by melt transesterification of diaryl carbonate with dihydroxyaryl compounds, which comprises a sequence of steps, **characterised in that**, in addition to the monohydroxyaryl compound, the excess diaryl carbonate is also isolated from the vapour streams **in that**
(i) the vapour stream produced is supplied halfway up a first column, and
(ii) the vapour stream is separated into a top product, which contains the high-purity monohydroxyaryl compound, and a bottom product, and
(iii) the high-purity monohydroxyaryl compound from (ii) may be reused directly in the production process, and
(iv) the bottom product from (ii) is, in turn, supplied halfway up a second column, and
(v) in the second column, this first bottom product is separated into a bottom product of the second column, which contains the high-boiling by-products, and a top product, and
(vi) the top product from (v) is, in turn, supplied halfway up a third column, and
(vii) in the third column, the low boilers are removed via the top and diaryl carbonate is removed as the bottom product or in the side stream, and
(viii) the removed diaryl carbonate is returned directly to the transesterification process for producing polycarbonate.

## Revendications

1. Procédé de préparation de polycarbonate par trans-estérification en milieu fondu de carbonate de diaryle avec des composés dihydroxyaryliques, qui comporte un certain nombre d'étapes, **caractérisé en ce que** en plus du composé monohydroxyarylique, le carbonate de diaryle en excès est également isolé des courants de vapeurs, procédé dans lequel :
(i) le courant de vapeur formé est introduit à mi-hauteur d'une première colonne , et
(ii) le courant de vapeur est séparé en un produit de tête, qui contient le composé monohydroxyarylique très pur, et en un produit de fond, et
(iii) le composé monohydroxyarylique très pur provenant de (ii) peut être à nouveau utilisé directement dans le procédé de préparation, et
(iv) le produit de fond de (ii) est envoyé à nouveau à mi-hauteur d'une deuxième colonne, et
(v) dans la deuxième colonne, ce premier produit de fond se trouve séparé en un produit de fond de la deuxième colonne, qui contient les sous-produits de point d'ébullition élevé, et en un produit de tête, et
(vi) le produit de tête de (v) est envoyé à nouveau à mi-hauteur d'une troisième colonne, et
(vii) dans la troisième colonne, les produits de bas point d'ébullition sont retirés en tête et le carbonate de diaryle est retiré sous forme de produit de fond ou en courant latéral, et
(vii) le carbonate de diaryle retiré est renvoyé directement au procédé de trans-estérification pour la préparation de polycarbonate.
